(19) **Europäisches Patentamt** **European Patent Office** **Office européen des brevets**

(11) **EP 4 189 351 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **21752045.1**

(22) Anmeldetag: **29.07.2021**

(51) Internationale Patentklassifikation (IPC):
**G01L 1/24** *(2006.01)* **G01L 3/12** *(2006.01)*
**G01L 3/14** *(2006.01)* **G01L 5/166** *(2020.01)*
**G01L 5/24** *(2006.01)*

(52) Gemeinsame Patentklassifikation (CPC):
**G01L 1/24; G01L 1/241; G01L 3/12; G01L 3/1421;
G01L 5/166; G01L 5/24**

(86) Internationale Anmeldenummer:
**PCT/EP2021/071303**

(87) Internationale Veröffentlichungsnummer:
**WO 2022/023480 (03.02.2022 Gazette 2022/05)**

(54) **BAUTEIL MIT EINER INTEGRIERTEN SENSORVORRICHTUNG FÜR EINE OPTISCHE, MEHRACHSIGE MESSUNG EINER KRAFTEINWIRKUNG**

COMPONENT WITH AN INTEGRATED SENSOR DEVICE FOR AN OPTICAL, MULTIAXIS MEASUREMENT OF A FORCE EFFECT

PIÈCE DOTÉE D'UN DISPOSITIF DE DÉTECTION INTÉGRÉ POUR UNE MESURE OPTIQUE, SUR PLUSIEURS AXES, D'UNE FORCE APPLIQUÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2020 DE 102020120192**

(43) Veröffentlichungstag der Anmeldung:
**07.06.2023 Patentblatt 2023/23**

(73) Patentinhaber: **Technische Universität Darmstadt
64289 Darmstadt (DE)**

(72) Erfinder:
• **GROCHE, Peter
64367 Darmstadt (DE)**
• **AL-BARADONI, Nassr
64283 Darmstadt (DE)**

(74) Vertreter: **LifeTech IP
Spies & Behrndt Patentanwälte PartG mbB
Elsenheimerstraße 47a
80687 München (DE)**

(56) Entgegenhaltungen:
**DE-A1- 102017 101 580 US-A1- 2013 265 233
US-A1- 2019 072 443**

**Beschreibung**

Die vorliegende Erfindung bezieht sich auf ein Bauteil mit einer integrierten Sensorvorrichtung für eine optische, mehrachsige Messung einer Krafteinwirkung auf das Bauteil, ein Verfahren zur Herstellung eines solchen Bauteils mit integrierter Sensorvorrichtung, und insbesondere auf eine strukturintegrierte optische mehrachsige Kraft-/Drehmomentmessung.

HINTERGRUND

Zur Messung einer Krafteinwirkung auf ein Bauteil bzw. ein Teil einer Struktur sind Sensorvorrichtungen bekannt, die in das Bauteil integriert sind. So offenbart etwa das Patent DE 10 2012 005 614 B4 eine Tragstruktur mit einer in einen Hohlraum integrierten Sensoreinheit in Form eines Verbindungselements mit integrierter Sensorik. Zu einer Erfassung von Lasten und deren Wirkrichtung weist die Sensorik Piezoaktoren oder auch Dehnmessstreifen auf. Dehnmessstreifen oder piezoelektrische Aufnehmer dienen auch beispielsweise in einer in WO 2016 177 356 A1 offenbarten und in einer Hohlwelle integrierten Sensoreinheit der Bestimmung einer mechanischen Beanspruchung der Hohlwelle. Daneben sind auch Sensoreinrichtungen bekannt, die auf optischen Einrichtungen basieren und Kräfte in mehreren Achsen detektieren. So zeigt etwa das Dokument WO 2013 072 712 A1 ein auf einem Trägerelement unter einer halbkugelförmigen Deckschicht angeordnete Lichtquelle sowie einen Lichtdetektor, die ausgebildet sind, um eine Verformung der Deckschicht aufgrund einer Lichtreflektion an derselben zu ermitteln. Ferner sind auf Interferometrie basierende Sensoreinheiten bekannt, wie etwa der Interferometer aus der Schrift DE 41 32 110 A1, der in einem elastisch deformierbaren Körper eingebettet ist.

Daneben sind optische Sensoren für mehrachsige Messungen einer Krafteinwirkung bekannt. So offenbart etwa die Offenlegungsschrift US 2013/0265233 A1 eine optische Messvorrichtung für mehrachsige Eingabegeräte mit mehreren gegeneinander beweglichen Teilen. Die Schrift US 2019/0072443 A1 offenbart eine optische Messvorrichtung für einen Roboter, die ausgebildet ist, um eine Verschiebung eines inneren Elements gegenüber einem mit diesem durch flexible Elemente verbundenen äußeren Element in mehreren Achsen zu bestimmen. Zur optischen Messtechnik offenbart die Schrift DE 10 2017 101 580 A1 ein Laserinterferometer, durch das bereits ein geringer Parallelversatz des reflektierten Laserstrahls ausgemessen und so Verschiebungen eines zu vermessenden Objekts bestimmt werden können.

Nachteile der integrierten Sensoren im Stand der Technik bestehen bei mehrachsiger Messung durch Dehnmessstreifen- und piezobasierte Ausführungen in den hohen Kosten und der aufwendigen Herstellung der Messkette. Bei den optischen mehrachsigen Kraftsensoren ist die erforderliche große Deformation der Sensorkörper hinderlich. Bei Kraftsensoren mit Interferometer liegt ein Nachteil bislang in einer Störempfindlichkeit während des Auf- bzw. Zusammenbaus.

Es besteht somit ein Bedarf nach Bauteilen mit kosten- und herstellungseffizient integrierten optischen Messsensoren, die ausgebildet sind, um Belastungen der Bauteile aufgrund von Krafteinwirkungen durch äußere Kräfte oder Drehmomente in mehreren räumlichen Achsen bzw. Richtungen zu messen.

KURZBESCHREIBUNG DER ERFINDUNG

Dieses Ziel wird zumindest teilweise durch ein Bauteil mit einer integrierten Sensorvorrichtung nach Anspruch 1 sowie durch ein Verfahren zur Herstellung eines solchen Bauteils mit integrierter Sensoreinheit nach Anspruch 8 erreicht. Die abhängigen Ansprüche beziehen sich auf vorteilhafte Weiterbildungen des Gegenstands des Anspruchs 1.

Die vorliegende Erfindung bezieht sich auf ein Bauteil mit einer integrierten Sensorvorrichtung für eine optische, mehrachsige Messung einer Krafteinwirkung (einer Kraft oder eines Drehmoments) auf das Bauteil. Das Bauteil weist dabei einen Hohlraum auf, in den ein erstes Tragelement mit einem oder mehreren ersten optischen Elementen sowie ein zweites Tragelement mit einem oder mehreren zweiten optischen Elementen ausgebildet und teilweise in das Bauteil eingefügt sind. Die in ein Material des Bauteils gefügten Anteile des ersten und des zweiten Tragelements fixieren dabei die Tragelemente am Bauteil. Die Tragelemente können dabei beispielsweise durch Löten, Kleben, Schweißen oder Schraubenverbindung fixiert sein; diese Fügeverfahren sind allerdings nicht ausreichend sicher und nur bedingt für hohe Anforderungen der Sensorvorrichtung an eine präzise, spielfreie und langzeitstabile Verbindung mit dem Bauteil geeignet. Vorteilhafterweise ist das Fixieren der Tragelemente über ein Kaltmassivumformen oder ein Kaltumformen der Tragelemente und/oder des Bauteils erfolgt. Ferner umfasst das Bauteil eine Übertragungseinrichtung, die ausgebildet ist, um an eine Energiequelle angeschlossen zu werden, und um bei Anschluss an die Energiequelle mindestens zwei Strahlen in voneinander unabhängigen Richtungen zu übertragen bzw. zu erzeugen, wobei die Strahlen jeweils zwischen den ersten optischen Elementen und den zweiten optischen Elementen durch den Hohlraum verlaufen. Dabei sind die ersten optischen Elemente und die zweiten optischen Elemente ausgebildet, um basierend auf den mindestens zwei Strahlen eine Information über eine relative Positionsänderung des ersten Tragelements bezüglich des zweiten Tragelements zu erzeugen. Die Übertragungseinrichtung ist zudem ausgebildet, um die Information zur Messung der Krafteinwirkung bereitzustellen, bzw. um die Information aus dem Bauelement heraus zu übertragen, wobei die zweiten optischen Elemente einen Spiegel aufweisen und die zumindest zwei Strahlen einen gespiegelten Strahl und einen ungespiegelten Strahl aufweisen.

Eine relative Positionsänderung zwischen dem ersten und dem zweiten Tragelement tritt dabei aufgrund der durch Fügen bewirkten Verbindung des ersten und des zweiten Tragelements mit dem Bauteil ein, wenn eine äußere Kraft oder ein Drehmoment auf das Bauteil einwirken und es aufgrund einer Elastizität des Bauteils verformen. Die zwei Strahlen sind vorteilhafterweise Teil eines Strahlengangs, der geeignet ist, auch bei geringen Verformungen des Bauteils durch äußere Krafteinwirkung eine Information über die Positionsänderung zu gewährleisten. Die unabhängigen Richtungen der mindestens zwei Strahlen erlauben eine Messung der Positionsänderung bzw. der Krafteinwirkung bezüglich mehrerer Achsen bzw. Richtungen. Die ersten und zweiten optischen Elemente können ausgebildet sein, um die mindestens zwei Strahlen zu einem gesammelten Strahl zu überlagern, und die Übertragungseinrichtung kann ausgebildet sein, um den gesammelten Strahl aus der Struktur heraus zu übertragen. Zur Erzeugung der Information kann beispielsweise eine pixel-basierte Erfassung einer Verschiebung, etwa eine digitale Bildkorrelation oder ein digitales Moiré-Verfahren, verwendet werden. Alternativ oder zusätzlich kann zumindest einer der Strahlen zwischen teilweise reflektierenden Platten (oder halbdurchlässigen Spiegeln) verlaufen und so ein Fabry-Pérot-Interferometer bilden. Zudem kann auch zumindest einer der Strahlen Teil eines Strahlengangs eines Michelson-Interferometers sein.

Optional ist die Übertragungseinrichtung ausgebildet, um an eine Lichtquelle als Energiequelle angeschlossen zu werden. Die Lichtquelle kann insbesondere ein Lasergerät sein. Der Anschluss kann als Einkoppeln eines Laserstrahls in einen Lichtleiter wie z.B. ein Glasfaserkabel ausgeführt sein, das ausgebildet ist, um den Laserstrahl an die ersten und/oder die zweiten optischen Elemente heranzuführen und so einen Strahlengang zwischen den optischen Elementen zu erzeugen, der die mindestens zwei Strahlen umfasst. Die Übertragungseinrichtung kann aber auch ausgebildet sein, um an eine Stromquelle als Energiequelle angeschlossen zu werden. In diesem Fall kann ein Stromkabel Energie zu einem oder mehreren der ersten und/oder zweiten optischen Elemente leiten, die ausgebildet sind, einen die mindestens zwei Strahlen umfassenden Strahlengang zu erzeugen. Die Übertragungseinrichtung kann ferner ausgebildet sein, um die Information über die relative Positionsänderung des ersten Tragelements bezüglich des zweiten Tragelements aus dem Bauteil heraus durch eine Lichtleitung zu übertragen. Dazu kann wieder ein Glasfaserkabel vorgesehen sein. Die Übertragungseinrichtung kann aber auch ausgebildet sein, um die Information aus dem Bauteil heraus durch eine elektrische Leitung zu übertragen. Dazu kann beispielsweise eine Überlagerung der Strahlen durch optische Elemente wie etwa Dioden, Halbleiterbauelemente oder Kameras in ein elektrisches Signal umgewandelt werden, das die Information durch die elektrische Leitung überträgt.

Optional ist das Bauteil eines der folgenden: eine Hohlwelle, ein hohlzylindrisches Bauteil, ein Rohr, ein Roboterelement (insbesondere ein Roboterarm), ein für ein Bauwerk bestimmtes Element, ein Kran- oder Lastarm, ein Verbindungselement, eine Säule einer Werkzeugmaschine, ein Werkzeug, ein Werkzeughalter.

Optional weisen die ersten optischen Elemente und/oder die zweiten optischen Elemente ein optisches Muster auf und sind ausgebildet, um die mindestens zwei Strahlen zu überlagern, so dass die Information eine Änderung eines erfassten optischen Bildes des optischen Musters umfasst. Die Änderung des optischen Bildes dieses Musters kann insbesondere durch eine Verschiebung des optischen Musters zustande kommen. Beispielsweise können Masken im Lauf der zwei Strahlen angebracht sein, die als optisches Muster jeweils Öffnungen aufweisen, so dass die Strahlen ein Bild des optischen Musters übertragen. Die Änderung des Bildes resultiert dann beispielsweise aus einer relativen Verschiebung und/oder Drehung der Öffnungen, ausgelöst durch die relative Positionsänderung der Tragelemente. Die Änderung des Bildes kann insbesondere durch ein pixelbasiertes Verfahren aus den überlagerten Strahlen bestimmt werden. Bei dem pixelbasierten Verfahren kann es sich etwa um eine digitale Bildkorrelation oder ein Verfahren, bei dem eine Verschiebung eines Moiré-Musters gemessen wird, handeln.

Optional bilden die ersten optischen Elemente und die zweiten optischen Elemente für zumindest einen der mindestens zwei Strahlen ein Michelson-Interferometer. Dieses führt auf ein Michelson-Interferenzmuster, das zur Erzeugung der Information über die relative Positionsänderung verwendet wird, bzw. das diese Information darstellt.

Optional weisen zumindest ein erstes optisches Element und mindestens ein zweites optisches Element jeweils eine teilweise reflektierende Platte auf und sind ausgebildet, um für mindestens einen der mindestens zwei Strahlen ein Fabry-Pérot-Interferometer zu bilden.

Optional ist mindestens ein weiteres Tragelement mit einem oder mehreren weiteren optischen Elementen in dem Hohlraum ausgebildet und teilweise in das Bauteil eingefügt, so dass das mindestens eine weitere Tragelement entsprechend im Strahlengang einbezogen ist und die Information auch auf eine relative Positionsänderung bezüglich des oder der zusätzlichen Tragelemente rückschließen lässt.

Ausführungsbeispiele beziehen sich zudem auf ein Verfahren zur Herstellung eines Bauteils nach Anspruch 1 mit einer integrierten Sensorvorrichtung für eine optische, mehrachsige Messung einer Krafteinwirkung auf das Bauteil. Das Bauteil umfasst einen Hohlraum, ein erstes Tragelement mit ersten optischen Elementen und mindestens ein weiteres Tragelement mit weiteren optischen Elementen. Das Verfahren umfasst als Schritte ein Bereitstellen eines Ausgangsbauteils mit einem Ausgangshohlraum; ein Positionieren des ersten Tragelements und des mindestens einen weiteren Tragelements in den Ausgangshohlraum des Ausgangsbauteils; ein Umformen des Ausgangsbauteils, um so das Bauteil und den Hohlraum auszubilden; und dadurch ein plastisches Fügen des ersten Tragelements und des mindestens einen weiteren Tragelements, um so das erste Tragelement und das zweite Tragelement in dem Hohlraum zu fixieren.

Im Rahmen herkömmlicher Fügeverfahren zur Fixierung der Tragelemente könnten diese auch beispielsweise durch Löten, Kleben, Schweißen oder durch eine Schraubenverbindung fixiert werden. Bei hohen Anforderungen der Sensorvorrichtung an eine präzise, spielfreie und/oder langzeitstabile Verbindung mit dem Bauteil können sich diese Fügeverfahren allerdings als nicht sicher erweisen. Beim hier als bevorzugter Ausführungsform dargestellten Umformen kann es sich insbesondere um ein Kaltmassivumformen oder um ein Kaltumformen handeln. Durch das Umformen wird das erste und das mindestens eine weitere Tragelement an der Begrenzung des Hohlraumes fixiert. Dazu können insbesondere die folgenden zwei Ausführungsformen des Verfahrens zur Anwendung kommen.

In einer ersten Ausführungsform umfasst zumindest eines der Tragelemente einen Kern aus sehr hartem Material und weist einen Randbereich auf, der ein im Vergleich zum Material des Kerns leichter deformierbares Material umfasst. Das leichter deformierbare Material wird durch das Umformen des Bauteils plastisch verformt, so dass das mindestens eine Tragelement im entstehenden Hohlraum fixiert wird.

In einer zweiten Ausführungsform weist zumindest eines der Tragelemente ein sehr hartes Material verglichen mit einem Material des Ausgangsbauteils auf, so dass beim Umformen das Ausgangsbauteil durch das harte Material des mindestens einen Tragelements plastisch deformiert wird. Das Tragelement wird so in dem Hohlraum des durch das Umformen entstehenden Bauteils fixiert.

Beide Ausführungsformen können auch kombiniert werden, d.h. verschiedene Tragelemente können durch verschiedene Ausführungsformen fixiert werden.

Vorteilhafterweise kann zunächst das erste Tragelement eingefügt werden, bevor das mindestens eine weitere Tragelement positioniert wird. Zur verbesserten Positionierung bzw. zu einer Verbesserung einer Position der Tragelemente kann beim Positionieren und/oder während des Umformens die Sensorvorrichtung eingekoppelt bzw. betrieben werden.

Darüber hinaus beziehen sich Ausführungsbeispiele auch auf Verfahren zur Verwendung der integrierten Sensorvorrichtung für eine optische, mehrachsige Messung einer Krafteinwirkung auf ein Bauteil, das einen Hohlraum aufweist, in dem ein erstes Tragelement mit einem oder mehreren ersten optischen Elementen und mindestens ein zweites Tragelement mit einem oder mehreren zweiten bzw. weiteren optischen Elementen ausgebildet und teilweise in das Bauelement eingefügt sind, und das weiter eine Übertragungseinrichtung aufweist, die ausgebildet ist, um an eine Energiequelle angeschlossen zu werden. Ein solches Verfahren umfasst die Schritte:

Erzeugen, durch die an die Energiequelle angeschlossene Übertragungseinrichtung, mindestens zweier Strahlen in voneinander unabhängigen Richtungen, wobei die Strahlen jeweils zwischen den ersten optischen Elementen und den zweiten optischen Elementen durch den Hohlraum verlaufen;

Erzeugen, durch die ersten optischen Elemente und die zweiten optischen Elemente und basierend auf den mindestens zwei Strahlen, einer Information über eine relative Positionsänderung des ersten Tragelements bezüglich des zweiten Tragelements;

Übertragen, durch die Übertragungseinrichtung, der Information über die relative Positionsänderung, um so die Krafteinwirkung zu messen.

Ausführungsbeispiele für das vorliegende Bauteil mit integrierter Sensorvorrichtung sind somit dadurch gekennzeichnet, dass innerhalb einer mindestens teilweise hohlen Struktur des Bauteils mindestens zwei Tragelemente fixiert sind, auf denen optische Elemente wie etwa Lichtleitfaser, Spiegel, Lichtquelle, optische Marker und Kamera befestigt sind. Die optischen Elemente sind so zueinander positioniert, dass eine Relativverschiebung oder -verdrehung der Tragelemente zueinander beispielsweise eine Änderung eines von einer internen oder über Lichtleitfaser verbundenen externen Kamera erfassten Musters bewirkt. Diese Änderung des Musters kann über eine Bildauswertung auf die vorliegende Deformation zurückgeführt werden. Ausführungsbeispiele realisieren dabei verschiedene Strahlengänge, die jeweils Strahlen in verschiedene Richtungen bzw. in schrägen Ebenen umfassen. Die Tragelemente werden dazu vorteilhafterweise in die Struktur des Bauteils durch (teilweises) plastisches Fügen integriert. Dazu umfassen die Tragelemente zumindest jeweils in einem Teil ein hochfestes und starres Material, an dem auch die optischen Elemente befestigt sein können. Die Festigkeit bzw. die Härte des Materials ist dabei größer als diejenige einer Hohlraumwand der Bauteilstruktur, so dass die Tragelemente durch Umformen des Bauteils eingefügt werden können. Für eine Positionierung bzw. Fixierung und Ausrichtung der Tragelemente in der Struktur während des plastischen Fügens können die Tragelemente jeweils auch insbesondere in einem Randbereich ein weicheres Material aufweisen, das die Beibehaltung der Anordnung der Tragelemente im Umformungsprozess sicherstellt. So kann ein Tragelement beispielsweise einen sehr harten Kern- und einen im Vergleich dazu leichter deformierbaren Randbereich aufweisen.

Auf diese Weise können sowohl interferenz- als auch pixelbasierte optische Messketten in Tragstrukturen umformtechnisch eingebettet werden. Die integrierten Sensoren bestehen dann aus mindestens zwei Teilen, die separat und mit hoher Präzision zueinander in der Struktur eingefügt sind. Erweiterungen der Messachsen werden durch den Einsatz von Spiegeln und beispielsweise durch eine Schrägstellung eines Teils des Strahlganges zu einer Längsachse der Tragstruktur realisiert. Für die angesprochenen pixelbasierten Verfahren kann ein passendes Muster auf eine Fotomaske oder auf einer Oberfläche aufgebracht werden, so dass dessen relative Verschiebung zu einem anderen optischen Element (z.B. einer Kamera) bei einer Belastung der Struktur aufgenommen wird. Durch die Teilung des Strahlgangs (schräge Muster und Spiegel) wird eine Verschiebung des Musters relativ zur Kamera in eine relative Positionsänderung zwischen den Tragelementen übersetzt, und so die Kraft- oder Drehmomenteinwirkung erfasst. Abhängig vom Muster kann die Auswertung bei den pixelbasierten Verfahren entweder durch die digitale Bildkorrelation oder durch digitale Moiré-Verfahren (Überlagerung von Linienmustern) erfolgen. Durch diese pixelbasierten Verfahren können insbesondere parallele Verschiebungen zwischen zwei Tragelementen in allen sechs Freiheitsgraden bestimmt werden. Auch Abstandsverschiebungen lassen sich messen. Die Sensorvorrichtung ist in ähnlicher Weise jedoch auch beispielsweise für ein Fabry-Pérot- und/oder ein Verfahren der Michelson-Interferometrie realisierbar. Hier kann zusätzlich zur parallelen Verschiebung ebenfalls eine Änderung eines Abstands zwischen den Tragelementen mithilfe eines schräg eingebauten Interferometers und einer geeigneten Strahlführung (durch Spiegel) erfasst werden. Es sind auch Kombinationen verschiedener Messmethoden für unterschiedliche Strahlen möglich.

Bei herkömmlichen Sensorvorrichtungen zur Erfassung von Kräften oder Drehmomenten auf Bauteile sind insbesondere auf Veränderungen elektrischer Eigenschaften beruhende Messketten weitgehend standardisiert. Sie erfordern aber neben den Sensoren selber weitere elektrische Elemente wie Ladungsverstärker oder Brückenschaltungen. Sie erfordern auch die Speisung mit elektrischer Energie, und insbesondere bei einer Erfassung von Kräften oder Drehmomenten bezüglich mehrerer Achsen steigt der Aufwand stark an. In einigen herkömmlichen Messketten werden auch vorgespannte Strukturen bzw. Sensorvorrichtungen verwendet, was in manchen Anwendungen nachteilig sein kann.

Demgegenüber bieten Ausführungsformen der vorliegenden Erfindung die folgenden Vorteile. Das Bauteil mit integrierter Sensorvorrichtung erweitert die Messachsen durch kostengünstige Komponenten (insbesondere bei einer Verwendung von pixel-basierten Verfahren) und eine geeignete Anordnung der Strahlengänge, ferner durch eine integrale Bauweise aus optischen Elementen und Tragstrukturen. Es eröffnet zudem eine Möglichkeit zur Skalierung der Sensoren, und somit zu einer Herstellung sensorischer Strukturen in kleinen Dimensionen. Die integrale Bauweise wird insbesondere durch plastisches Fügen erreicht. Dies bewirkt einen kompakten Aufbau des Bauteils mit integrierter Sensorvorrichtung zur mehrachsigen Erfassung von Kräften und/oder Drehmomenten, die am Bauteil angreifen. Durch die Verwendung insbesondere von pixelbasierten Verfahren kann eine erhebliche Kosteneinsparung gegenüber herkömmlichen dehnmessstreifen- und piezobasierten Sensoren erreicht werden.

## KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1    illustriert ein Ausführungsbeispiel der vorliegenden Erfindung für ein Bauteil mit integrierter Sensorvorrichtung für ein pixel-basiertes Verfahren;

Fig. 2    illustriert ein weiteres Ausführungsbeispiel mit einer Fabry-Pérot-Sensorvorrichtung;

Fig. 3    illustriert ein weiteres Ausführungsbeispiel mit einer ein Michelson-Interferometer aufweisenden Sensorvorrichtung;

Fig. 4    illustriert eine Messung durch ein Ausführungsbeispiel nach Fig. 1 mit Hilfe einer digitalen Bildkorrelation;

Fig. 5    illustriert eine Messung durch ein Ausführungsbeispiel nach Fig. 1 mit Hilfe eines digitalen Moiré-Verfahrens;

Fig. 6    zeigt Schritte eines Verfahrens zur Herstellung eines Bauteils mit integrierter Sensorvorrichtung;

Fig. 7    illustriert weitere Ergebnisse von Ausführungsformen des Verfahrens nach Fig. 6.

## DETAILLIERTE BESCHREIBUNG

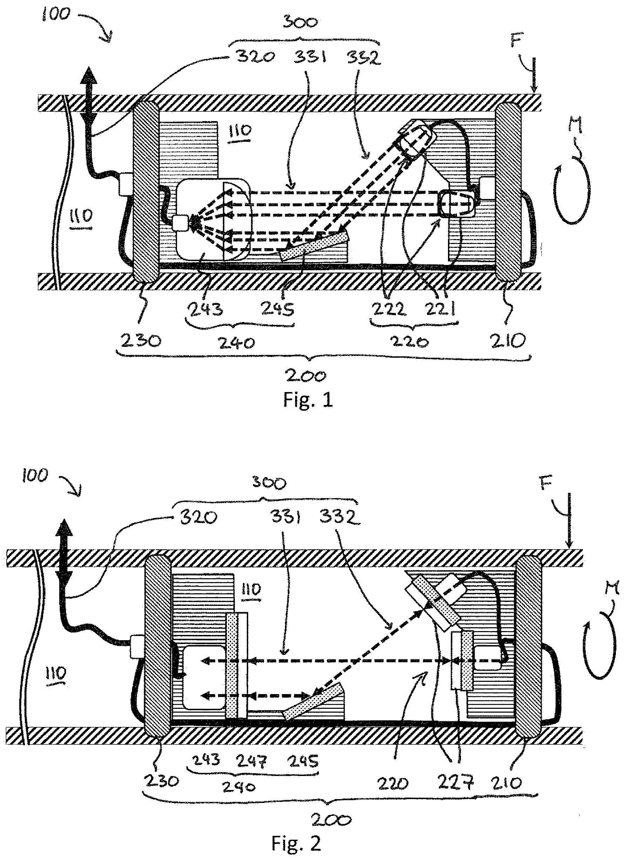

**Fig. 1** illustriert ein Ausführungsbeispiel der vorliegenden Erfindung für ein Bauteil 100 mit einer integrierten Sensorvorrichtung 200 für eine optische, mehrachsige Messung einer Kraft F und/oder eines Drehmoments M auf das Bauteil 100. Das Bauteil 100 weist einen Hohlraum 110 mit einer Wand 120 auf. Die Sensorvorrichtung 200 umfasst ein erstes Tragelement 210 mit mehreren ersten optischen Elementen 220. Im dargestellten Ausführungsbeispiel umfassen die ersten optischen Elemente 220 insbesondere zwei Strahlaufweitungselemente 221, die ausgebildet sind, um über eine Lichtleitung zugeführtes Licht aus einer Energiequelle aufzuweiten und jeweils durch ein optisches Muster 222 bzw. eine von hinten beleuchtete Fotomaske als Strahlen 331, 332 in den Hohlraum 110 zu führen. Die Sensorvorrichtung 200 umfasst zudem ein zweites Tragelement 230 mit mehreren zweiten optischen Elementen 240. Im dargestellten Ausführungsbeispiel umfassen die zweiten optischen Elemente 240 einen Spiegel 245 und ein Strahlsammlungselement 243, das ausgebildet ist, um die zwei Strahlen 331, 332 zu sammeln bzw. zu überlagern und als Lichtsignal durch eine Leitung 320, hier etwa ein Glasfaserkabel, weiterzuführen. Das erste Tragelement 210 und das zweite Tragelement 230 sind dabei in dem Hohlraum 110 ausgebildet und teilweise in das Bauteil 100 eingefügt. Weiter umfasst das Bauteil 100 eine Übertragungseinrichtung 300, die ausgebildet ist, um an eine Energiequelle - hier beispielsweise ein Lasergerät - angeschlossen zu werden, und um bei Anschluss an die Energiequelle die zwei Strahlen 331, 332 zu erzeugen. Die zwei Strahlen 331, 332 verlaufen dabei in voneinander unabhängigen Richtungen zwischen den ersten optischen Elementen 220 und den zweiten optischen Elementen 240 durch den Hohlraum 110. Die ersten optischen Elemente 220 und die zweiten optischen Elemente 240 sind ausgebildet, um basierend auf den zwei Strahlen 331, 332 eine Information über eine relative Positionsänderung des ersten Tragelements 210 bezüglich des zweiten Tragelements 230 zu erzeugen. Im vorliegenden Ausbildungsbeispiel geschieht dies durch die Überlagerung im Strahlsammlungselement 243. Die Übertragungseinrichtung 300 ist ausgebildet, um die Information zur Messung der Kraft F und/oder des Drehmoments M bereitzustellen, bzw. um diese Information aus dem Bauelement 100 heraus zu übertragen. Aufgrund der unabhängigen Richtungen der Strahlen 331, 332 erfolgt die Messung bezüglich mehrerer Achsen, die durch die Richtungen der Strahlen 331, 332 im Hohlraum 110 bestimmt sind: Durch die Kraft F bzw. das Drehmoment M wird eine Position des ersten Tragelements 210 relativ bezüglich einer Position des zweiten Tragelements 230 verschoben. Dadurch entsteht im Strahlsammlungselement 243 ein Unterschied in der Überlagerung der zwei Strahlen 331, 332, der als Information über eine Leitung 320 aus dem Bauelement 100 herausgeführt wird. Ein Rückschluss auf die Verschiebung, und damit ein Messen der Kraft F und/oder das Drehmoment M, ist dann beispielsweise durch Anwendung eines bekannten pixel-basierten Verfahrens oder durch Anwendung eines bekannten digitalen Moiré-Verfahrens auf die Information möglich.

In einem ähnlichen wie dem hier vorgestellten Ausführungsbeispiel kann die Übertragungseinrichtung 300 auch ausgebildet sein, um anstatt Licht eine Versorgungsspannung zu den optischen Elementen 220, 240 bzw. Bilder aus dem Bauteil 100 herauszuführen. Dann können anstelle oder zusätzlich zu den Strahlaufweitungselementen 221 lichtemittierende Dioden eingesetzt werden, um die Strahlen (331, 332) zu erzeugen. Das Strahlsammlungselement 243 kann als Kamera ausgeführt sein. Auch Mischformen dieses Ausführungen (beispielsweise mit einer Spannungsversorgung der ersten optischen Elemente 220 und einer Lichtleitung für eine Übertragung der Information, oder umgekehrt) sind möglich.

**Fig. 2** illustriert ein weiteres Ausführungsbeispiel des Bauteils 100 mit integrierter Sensorvorrichtung 200. Wie in dem in Figur 1 dargestellten Ausführungsbeispiel erzeugen die ersten optischen Elemente 220 zwei Strahlen 331, 332 in unabhängige Richtungen, umfassen jedoch hier für jeden der Strahlen 331, 332 jeweils eine teilweise reflektierende Platte 227. Eine weitere teilweise reflektierende Platte 247 befindet sich vor einem Strahlsammlungselement 243 als Teil der zweiten optischen Elemente 240. Die teilweise reflektierenden Platten 227, 247 bilden für die beiden Strahlen 331, 332 jeweils ein Fabry-Pérot-Interferometer bzw. optischen Resonator. Bei einer relativen Positionsänderung der Tragelemente 210, 230 ändert sich ein Abstand zwischen den teilweise reflektierenden Platten 227, 247 und somit eine Resonanzbedingung. Für monochromatische Strahlen 331, 332 führt dies auf eine Veränderung in einer Intensität eines optischen oder auch elektrischen Ausgangsignals, das durch das Strahlensammlungselement 227 erzeugt und über die Leitung 320 aus dem Bauteil 100 herausgeführt wird. Umfassen die Strahlen 331,332 mehrere Wellenlängen, führt die Veränderung der Resonanzbedingung auf eine farbliche Verschiebung des Ausgangsignals. Aus dem Ausgangsignal lässt sich auf die relative Positionsänderung der Tragelemente 210, 230 und somit auf die Kraft F bzw. das Drehmoment M rückschließen.

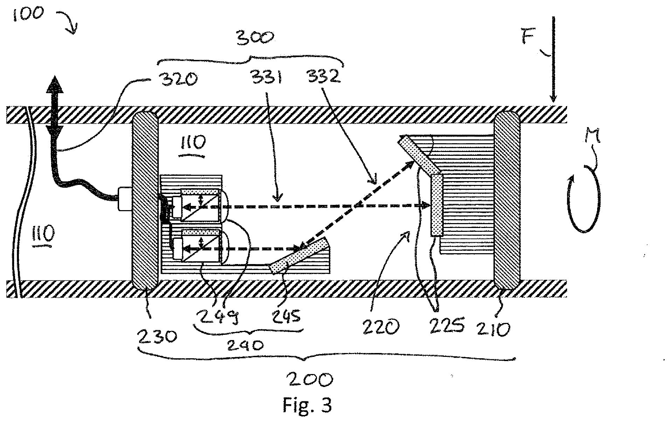

**Fig. 3** illustriert ein weiteres Ausführungsbeispiel des Bauteils 100 mit integrierter Sensorvorrichtung 200. Die Ausführung umfasst ein Bauteil 100 mit einem ersten Tragelement 210 mit ersten optischen Elementen 220 und einem zweiten Tragelement 230 mit zweiten optischen Elementen 240, ähnlich wie in den vorangehenden Figuren. Wieder umfasst der Strahlengang zwei Strahlen 331, 332 zwischen den ersten optischen Elementen 220 und den zweiten optischen Elementen 240 in voneinander unabhängigen räumlichen Richtungen. Die ersten und zweiten optischen Elemente 220, 240 sind dabei so ausgebildet, dass jeder der Strahlen 331, 332 jeweils ein Teil eines Strahlengangs eines Michelson-Interferometers ist. Eine relative Positionsverschiebung zwischen dem ersten Tragelement 210 und dem zweiten Tragelement 230 führt auf eine Veränderung einer Interferenz, die in den Interferenzelementen 249 gebildet wird. Wie in den vorangehenden Figuren wird diese Information als Ausgangsignal aus dem Bauteil 100 heraus übertragen.

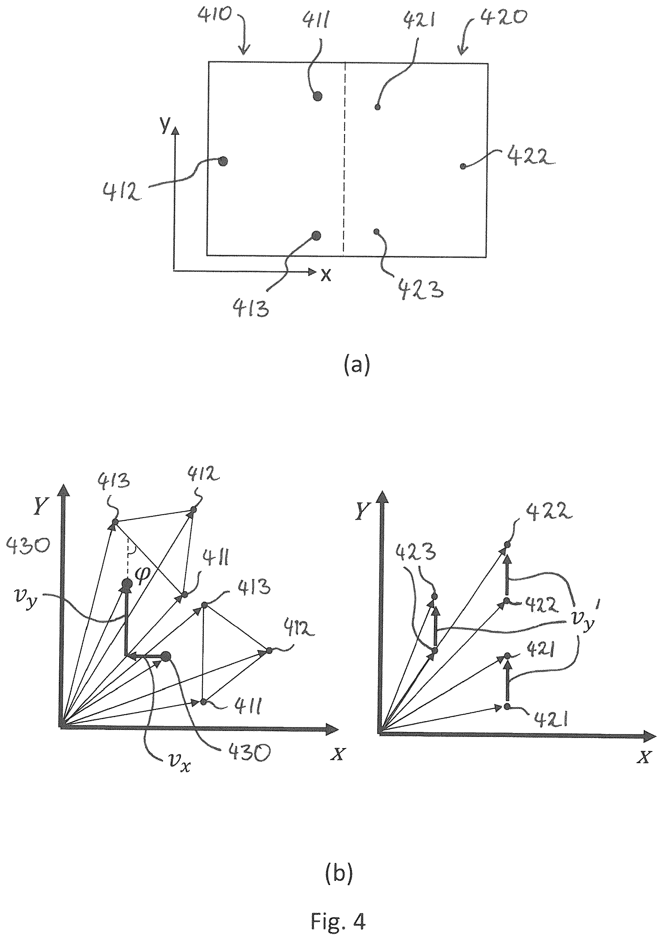

**Fig. 4** illustriert eine Messung einer Krafteinwirkung (einer Kraft F und eines Drehmoments M) auf das Bauteil 100 durch Bestimmung einer relativen Positionsänderung zwischen dem ersten Tragelement 210 und dem zweiten Tragelement 230 für ein Ausführungsbeispiel nach Figur 1. Hierbei kommt als pixelbasiertes Verfahren eine digitale Bildkorrelation zur Anwendung. In Teil (a) der Figur sind ein erstes Bild 410 eines optischen Musters 222, hervorgerufen im Strahlsammlungselement 243 durch den ersten Strahl 331, und ein zweites Bild 420 eines zweiten, hier beispielsweise mit dem ersten identischen optischen Musters 222, hervorgerufen im Strahlsammlungselement 243 durch den zweiten Strahl 332, dargestellt. Die Bilder 410, 420 sind dabei für das vorliegende Ausführungsbeispiel durch eine Spiegelung verbunden, die durch den Spiegel 245 bewirkt wird. Die Punkte 411, 412, 423 im ersten Bild stellen lichtdurchlässige Bereiche bzw. Berechnungspunkte in dem optischen Muster 222 dar. Sie entsprechen dabei den Berechnungspunkten 421, 423, 423 im zweiten Bild. Ein pixelbasiertes Verfahren umfasst ein Messen von Positionen der Berechnungspunkte 411 - 413, 421 - 423 in einem Zustand mit Krafteinwirkung und in einem Zustand ohne Krafteinwirkung sowie einen Vergleich der Positionen im Zustand mit Krafteinwirkung mit den Positionen im Zustand ohne Krafteinwirkung.

In Teil (b) der Figur ist links eine Verschiebung von Positionen der Berechnungspunkte 411, 412, 413 aus dem ungespiegelten ersten Strahl 331 dargestellt, wie sie durch die Krafteinwirkung hervorgerufen wird. Dabei lässt sich aus der Verschiebung der Berechnungspunkte 421, 422, 423 insbesondere ein Drehpunkt 430 ermitteln, der eine Angriffsposition des Drehmoments M wiedergibt. Basierend auf einer horizontalen Verschiebung $v_x$ des Drehpunkts 440 lässt sich eine Größe einer auf das Bauteil 100 wirkenden horizontalen Kraftkomponente der Kraft F ermitteln. Basierend auf einer vertikalen Verschiebung $v_y$ des Drehpunkts 430 lässt sich eine Größe einer auf das Bauteil 100 wirkenden vertikalen Kraftkomponente der Kraft F ermitteln. Aus einem Winkel $\varphi$ folgt zudem eine Größe des Drehmoments M.

In Teil (b) der Figur ist zudem rechts eine Verschiebung von Positionen der Berechnungspunkte 421, 422, 423 aus dem gespiegelten ersten Strahl 332 dargestellt, die sich nach Abzug einer Verschiebung der Berechnungspunkte 411, 412, 413 ergibt, die links in Teil (b) dargestellt ist. Basierend auf der daraus resultierenden Verschiebung $v_y'$ lässt sich in der vorliegenden Illustration eine Größe einer auf das Bauteil 100 wirkenden axialen Kraftkomponente der Kraft F ermitteln.

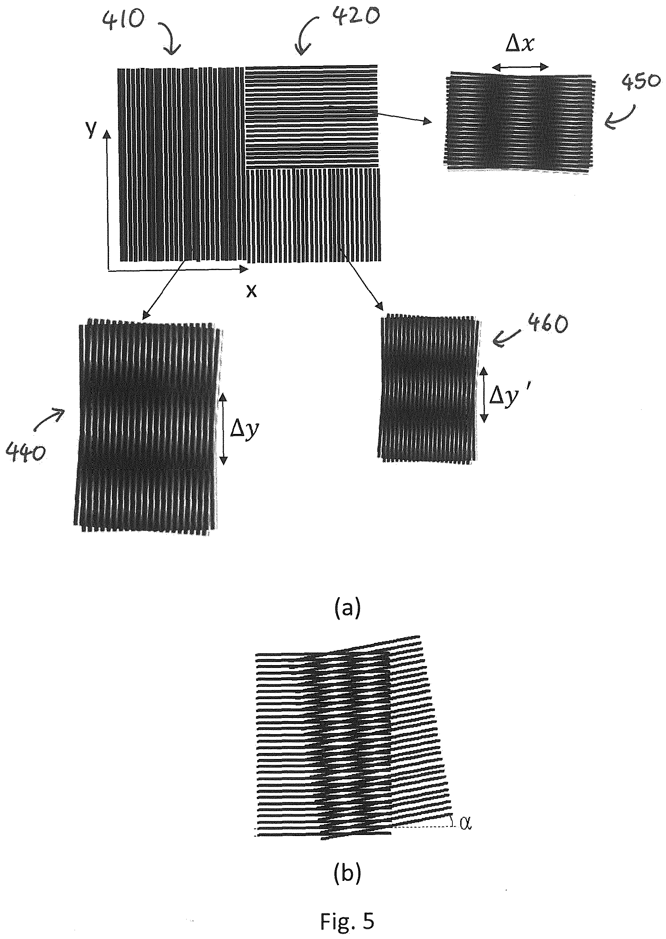

**Fig. 5** illustriert eine Messung einer Krafteinwirkung (einer Kraft F und eines Drehmoments M) auf das Bauteil 100 durch Bestimmung einer relativen Positionsänderung zwischen dem ersten Tragelement 210 und dem zweiten Tragelement 230 für ein Ausführungsbeispiel nach Figur 1. Hierbei kommt als pixelbasiertes Verfahren ein digitales Moiré-Verfahren zur Anwendung.

In Teil (a) der Figur sind ein erstes Bild 410 eines optischen Musters 222, hervorgerufen im Strahlsammlungselement 243 durch den ersten Strahl 331, und ein zweites Bild 420 eines zweiten optischen Musters 222, hervorgerufen im Strahlsammlungselement 243 durch den zweiten Strahl 332, dargestellt. Die optischen Muster 222 umfassen hier jeweils periodische Gitterstrukturen in unterschiedlicher Ausrichtung. Durch Aufzeichnung der Gitterstrukturen kann deren Ausrichtung ohne und mit der Krafteinwirkung verglichen werden. Dabei gibt sich für das erste Bild 410 eine Überlagerung, die ein Moiré-Muster 440 einer ersten Periode $\Delta y$ aufweist. Für das zweite Bild 420 ergibt sich entsprechend ein Moiré-Muster 450, welches eine zweite Periode $\Delta x$ aufweist, und ein Moiré-Muster 460, welches eine dritte Periode $\Delta y'$ aufweist. Kraftkomponenten der Kraft F in einer horizontalen, vertikalen und axialen Richtung lassen sich aus diesen Perioden bestimmen.

In einem Teil (b) der Figur ist ein Moiré-Muster dargestellt, welches durch eine Überlagerung einer Gitterstruktur in einem Zustand ohne Krafteinwirkung auf das Bauteil 100 und einer Gitterstruktur in einem Zustand mit Krafteinwirkung auf das Bauteil 100 entsteht. Die Gitterstrukturen weisen dabei relativ zueinander einen Winkel $\alpha$ auf. Basierend auf dem Winkel $\alpha$ lässt sich beispielsweise eine Größe des Dehmoments M bestimmen.

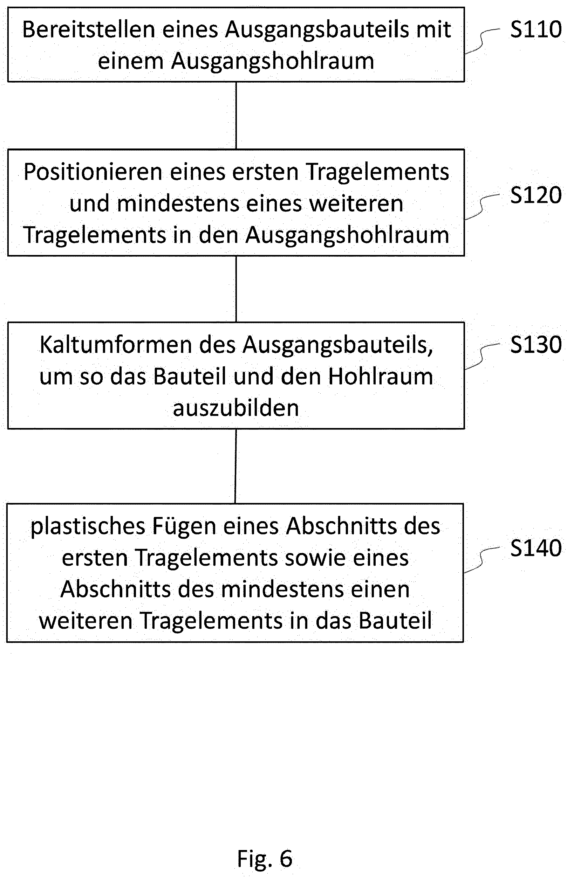

**Fig. 6** zeigt Schritte eines Verfahrens zur Herstellung eines Bauteils 100 mit einer integrierten Sensorvorrichtung 200 für eine optische, mehrachsige Messung einer Krafteinwirkung auf das Bauteil 100. Das Bauteil 100 umfasst einen Hohlraum 110, ein erstes Tragelement 210 mit ersten optischen Elementen 220 und mindestens ein weiteres Tragelement 230 mit weiteren optischen Elementen 240, wobei eine Härte des ersten Tragelements 210 und des mindestens einen weiteren Tragelements 230 größer ist als eine Härte des Bauteils 100. Insbesondere können die Tragelemente 210, 230 jeweils einen harten Bereich und einen weichen bzw. leichter deformierbaren Bereich aufweisen. Beispielsweise kann ein Tragelement mit einem Kern und einem leichter als der Kern deformierbaren Rand zum Einsatz kommen. Ein Schritt des Verfahrens umfasst ein Bereitstellen S110 eines Ausgangsbauteils mit einem Ausgangshohlraum. Ein weiterer Schritt umfasst ein Positionieren S120 des ersten Tragelements 210 und des mindestens einen weiteren Tragelements 230 in den Ausgangshohlraum. Ein weiterer Schritt umfasst dann ein Umformen S130 des Ausgangsbauteils, um so das Bauteil und den Hohlraum auszubilden. Das Umformen S130 kann insbesondere ein Kaltumformen, beispielsweise ein Rundpressen für ein zylinderförmiges Bauteil 100, oder auch ein Kaltmassivumformen umfassen. Durch das Umformen S130 der Struktur wird auch der Hohlraum 110 ausgebildet. Das Umformen S130 bewirkt zudem ein plastisches Fügen S140 des ersten Tragelements 210 sowie des zweiten Tragelements 230 in den Hohlraum 110 des Bauteils 100.

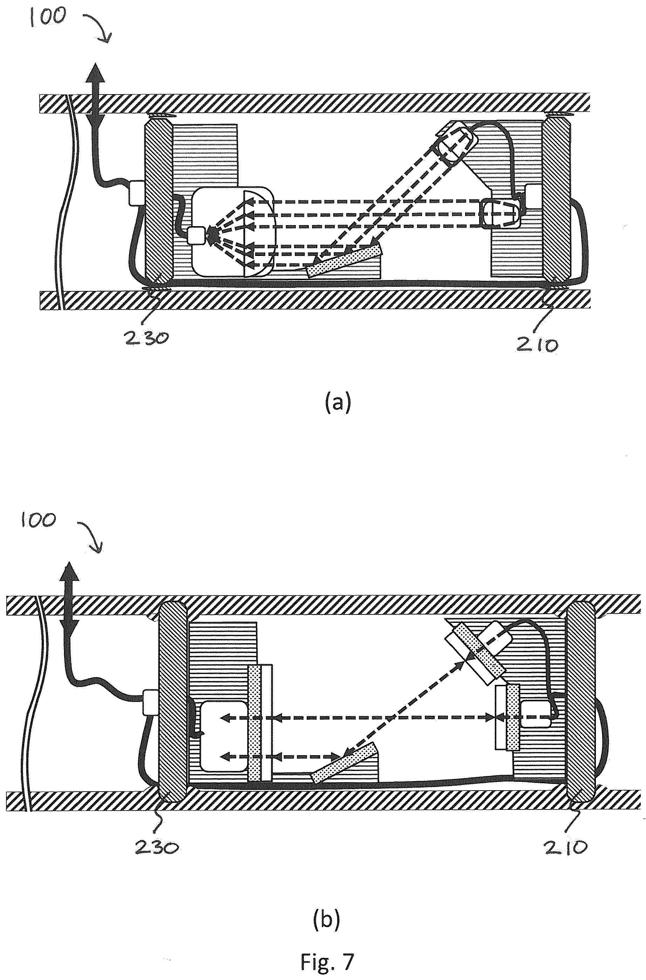

**Fig. 7** illustriert weitere Ergebnisse von Ausführungsformen des Verfahrens nach Fig. 6. In einem Teil (a) der Figur ist ein Ausführungsbeispiel mit einer Sensorvorrichtung 200 ähnlich wie in Figur 1 dargestellt. In diesem Ergebnis einer ersten Ausführungsform des Verfahrens weisen die Tragelemente 210, 230 einen Kern aus sehr hartem Material und einen Randbereich auf, der ein im Vergleich zum Material des Kerns leichter deformierbares Material umfasst. Das leichter deformierbare Material ist durch das Umformen S130 des Bauteils 100 plastisch verformt worden, so dass die Tragelemente 210, 230 im entstehenden Hohlraum 110 fixiert worden sind.

In einem Teil (b) der Figur ist ein Ausführungsbeispiel mit einer Sensorvorrichtung 200 ähnlich wie in Figur 2 dargestellt. In diesem Ergebnis einer zweiten Ausführungsform des Verfahrens weisen die Tragelemente 210, 230 ein sehr hartes Material im Vergleich zu einem Material des Bauteils 100 auf, so dass beim Umformen S130 das Material des Bauteils 100 durch das harte Material Tragelemente 210, 230 plastisch deformiert worden ist. Die Tragelemente 210, 230 sind auf diese Weise in dem Hohlraum 110 des durch das Umformen S130 entstandenen Bauteils 100 fixiert worden.

Größen, Verschiebungen und Winkel in den Figuren haben lediglich beispielhaften Charakter.

BEZUGSZEICHENLISTE

| | |
|---|---|
| 100 | Bauteil |
| 110 | Hohlraum |
| 120 | Wanddicke |
| 200 | Sensorvorrichtung |
| 210 | erstes Tragelement |
| 220 | erste optische Elemente |
| 221 | Strahlaufweitungselement |
| 222 | optische Maske |
| 225 | Spiegel der ersten optischen Elemente |
| 227 | teilweise reflektierende Platte der ersten optischen Elemente |
| 230 | zweites Tragelement |
| 240 | zweite optische Elemente |
| 243 | Strahlsammlungselement |
| 245 | Spiegel der zweiten optischen Elemente |
| 247 | teilweise reflektierende Platte der zweiten optischen Elemente |
| 249 | Interferenzelement |
| 300 | Übertragungseinrichtung |
| 320 | Leitung |
| 331 | erster Strahl |
| 332 | zweiter Strahl |
| 410 | Bild des optischen Musters im ersten Strahl |
| 411, 412, 413 | erste Berechnungspunkte |
| 420 | Bild des optischen Musters im zweiten Strahl |
| 421, 422, 423 | zweite Berechnungspunkte |
| 430 | Drehpunkt |
| 440, 450, 460 | Moiré-Muster |

$v_x, v_y, v'_y, \Delta x, \Delta y, \Delta y'$ Verschiebungen
$\alpha, \varphi$ Winkel
F Kraft
M Drehmoment

**Patentansprüche**

1. Ein Bauteil (100) mit einer integrierten Sensorvorrichtung (200) für eine optische, mehrachsige Messung einer Krafteinwirkung auf das Bauteil (100), das Bauteil (100) umfasst

   einen Hohlraum (110);
   ein erstes Tragelement (210) mit einem oder mehreren ersten optischen Elementen (220) sowie ein zweites Tragelement (230) mit einem oder mehreren zweiten optischen Elementen (240), wobei das erste Tragelement (210) und das zweite Tragelement (230) in dem Hohlraum (110) ausgebildet und teilweise in das Bauteil (100) eingefügt sind; und
   eine Übertragungseinrichtung (300), die ausgebildet ist,

   um an eine Energiequelle angeschlossen zu werden und
   um, bei Anschluss an die Energiequelle, mindestens zwei Strahlen (331, 332) in voneinander unabhängigen Richtungen zu übertragen, wobei die Strahlen (331, 332) jeweils zwischen den ersten optischen Elementen (220) und den zweiten optischen Elementen (240) durch den Hohlraum (110) verlaufen,

   wobei die ersten optischen Elemente (220) und die zweiten optischen Elemente (240) ausgebildet sind, um basierend auf den mindestens zwei Strahlen (331, 332) eine Information über eine relative Positionsänderung des ersten Tragelements (210) bezüglich des zweiten Tragelements (230) zu erzeugen, und wobei die Übertragungseinrichtung (300) ausgebildet ist, um die Information zur Messung der Krafteinwirkung bereitzustellen, wobei die zweiten optischen Elemente (240) einen Spiegel (245) aufweisen,
   **dadurch gekennzeichnet, dass**
   die zumindest zwei Strahlen (331, 332) einen gespiegelten Strahl (332) und einen ungespiegelten Strahl (331) aufweisen.

2. Das Bauteil (100) nach Anspruch 1, wobei die Übertragungseinrichtung (300) zu einem oder mehreren aus Folge ndem ausgebildet ist:

   Anschluss an eine Lichtquelle als Energiequelle,
   Anschluss an eine Stromquelle als Energiequelle,
   Übertragung der Information aus dem Bauteil (100) durch eine Lichtleitung (320),
   Übertragung der Information aus dem Bauteil (100) durch eine elektrische Leitung (320).

3. Das Bauteil (100) nach einem der vorangehenden Ansprüche, wobei das Bauteil (100) eines der folgenden ist:

eine Hohlwelle,
ein hohlzylindrisches Bauteil,
ein Rohr,
ein Roboterelement, insbesondere ein Roboterarm,
ein für ein Bauwerk bestimmtes Element,
ein Kranarm,
ein Verbindungselement,
eine Säule einer Werkzeugmaschine,
ein Werkzeug,
ein Werkzeughalter.

4. Das Bauteil (100) nach einem der vorangehenden Ansprüche, wobei die ersten optischen Elemente (220) oder die zweiten optischen Elemente (240) ein optisches Muster (222) aufweisen und ausgebildet sind, um die mindestens zwei Strahlen (331, 332) zu überlagern, so dass die Information eine Änderung eines erfassten optischen Bildes dieses Musters umfasst.

5. Das Bauteil (100) nach einem der Ansprüche 1 bis 3, wobei die ersten optischen Elemente (220) und die zweiten optischen Elemente (240) ein Michelson-Interferometer bilden und die Information auf einem Michelson-Interferenzmuster beruht.

6. Das Bauteil (100) nach einem der Ansprüche 1 bis 3, wobei zumindest eines der ersten optischen Elemente (220) und mindestens eines der zweiten optischen Elemente (240) jeweils eine teilweise reflektierende Platte (227, 247) aufweisen und ausgebildet sind, um für mindestens einen der mindestens zwei Strahlen (331, 332) ein Fabry-Pérot-Interferometer zu bilden.

7. Das Bauteil (100) nach einem der vorhergehenden Ansprüche, wobei mindestens ein weiteres Tragelement mit einem oder mehreren weiteren optischen Elementen in dem Hohlraum (100) ausgebildet und teilweise in das Bauteil (100) eingefügt ist.

8. Ein Verfahren zur Herstellung eines Bauteils (100) nach Anspruch 1, das Verfahren umfasst die Schritte

Bereitstellen (S110) eines Ausgangsbauteils mit einem Ausgangshohlraum;
Positionieren (S120) des ersten Tragelements (210) und des mindestens einen weiteren Tragelements (230) in den Ausgangshohlraum;
Umformen (S130) des Ausgangsbauteils, um so das Bauteil (100) und den Hohlraum (110) auszubilden; dadurch
plastisches Fügen (S140) des ersten Tragelements (210) sowie des mindestens einen weiteren Tragelements (230), um so das erste Tragelement (210) und das mindestens eine weitere Tragelement (230) in dem Hohlraum (110) zu fixieren.

## Claims

1. A component (100) having an integrated sensor device (200) for an optical, multi-axis measurement of a force effect on the component (100), the component (100) comprising

a cavity (110);
a first support element (210) having one or more first optical
elements (220) and a second support element (230) having one or more second optical elements (240), the first support element (210) and the second support element (230) being formed in the cavity (110) and partially inserted into the component (100); and
a transmission device (300) which is designed to be connected to an energy source and
to transmit, when connected to the energy source, at least two beams (331, 332) in mutually independent directions, the beams (331, 332) each extending between the first optical elements (220) and the second optical elements (240) through the cavity (110),
the first optical elements (220) and the second optical elements (240) being designed to generate, on the basis of the at least two beams (331, 332), information about a relative position change of the first support element (210) with respect to the second support element (230), and the transmission device (300) being designed to provide the information for measuring the force effect, the second optical elements (240) having a mirror (245),
**characterized in that**
the at least two beams (331, 332) have a reflected beam (332) and a non-reflected beam (331).

2. The component (100) according to claim 1, wherein the transmission device (300) is designed to form one or more of the following:

connection to a light source as an energy source,
connection to a power source as an energy source,
transmission of the information from the component (100) via a lighting line (320),

transmission of the information from the component (100) via an electrical line (320).

3. The component (100) according to either of the preceding claims, wherein the component (100) is one of the following:

> a hollow shaft,
> a hollow cylindrical component,
> a tube,
> a robot element, in particular a robot arm,
> an element intended for a building,
> a crane arm,
> a connecting element,
> a column of a machine tool,
> a tool,
> a tool holder.

4. The component (100) according to any of the preceding claims, wherein the first optical elements (220) or the second optical elements (240) have an optical pattern (222) and are designed to superimpose the at least two beams (331, 332) such that the information comprises a change in a captured optical image of this pattern.

5. The component (100) according to any of claims 1 to 3, wherein the first optical elements (220) and the second optical elements (240) form a Michelson interferometer and the information is based on a Michelson interference pattern.

6. The component (100) according to any of claims 1 to 3, wherein at least one of the first optical elements (220) and at least one of the second optical elements (240) each have a partially reflective plate (227, 247) and are designed to form a Fabry-Perot interferometer for at least one of the at least two beams (331, 332).

7. The component (100) according to any of the preceding claims, wherein at least one further support element having one or more further optical elements is formed in the cavity (100) and partially inserted into the component (100).

8. A method for producing a component (100) according to claim 1, the method comprising the steps of

> providing (S110) an initial component having an initial cavity;
> positioning (S120) the first support element (210) and the at least one further support element (230) in the initial cavity;
> shaping (S130) the initial component to form the component (100) and the cavity (110); thereby plastically joining (S140) the first support element (210) and the at least one further support element (230) in order to fix the first support element (210) and the at least one further support element (230) in the cavity (110).

## Revendications

1. Composant (100) comportant un dispositif formant capteur (200) intégré pour une mesure optique multiaxiale d'une force exercée sur le composant (100), le composant (100) comprenant

> une cavité (110) ;
> un premier élément de support (210) comportant un ou plusieurs premiers éléments optiques (220) et un second élément de support (230) comportant un ou plusieurs seconds éléments optiques (240), dans lequel le premier élément de support (210) et le second élément de support (230) sont réalisés dans la cavité (110) et partiellement insérés dans le composant (100) ; et
> un appareil de transmission (300), lequel est configuré pour
> être connecté à une source d'énergie et transmettre, lorsqu'il est connecté à la source d'énergie, au moins deux faisceaux (331, 332) dans des directions indépendantes l'une de l'autre, dans lequel les faisceaux (331, 332) s'étendent respectivement entre les premiers éléments optiques (220) et les seconds éléments optiques (240) à travers la cavité (110), dans lequel les premiers éléments optiques (220) et les seconds éléments optiques (240) sont configurés pour générer, sur la base des au moins deux faisceaux (331, 332), des informations concernant un changement de position relative du premier élément de support (210) par rapport au second élément de support (230), et dans lequel l'appareil de transmission (300) est configuré pour fournir les informations pour la mesure de l'action de la force, dans lequel les seconds éléments optiques (240) présentent un miroir (245),
> **caractérisé en ce que**
> les au moins deux faisceaux (331, 332) présentent un faisceau réfléchi (332) et un faisceau non réfléchi (331).

2. Composant (100) selon la revendication 1, dans lequel l'appareil de transmission (300) est configuré pour réaliser une ou plusieurs des actions suivantes :

> connexion à une source lumineuse comme source d'énergie,
> connexion à une source de courant comme source d'énergie,
> transmission des informations provenant du composant (100) par une ligne de lumière (320), transmission des informations provenant du composant (100) par une ligne électrique (320).

3. Composant (100) selon l'une des revendications précédentes, dans lequel le composant (100) est l'un des composants suivants :

   un arbre creux,
   un composant cylindrique creux,
   un tube,
   un élément de robot, en particulier un bras de robot,
   un élément destiné à une construction,
   un bras de grue,
   un élément de liaison,
   une colonne d'une machine-outil,
   un outil,
   un porte-outil.

4. Composant (100) selon l'une des revendications précédentes, dans lequel les premiers éléments optiques (220) ou les seconds éléments optiques (240) présentent un motif optique (222) et sont configurés pour superposer les au moins deux faisceaux (331, 332) de sorte que les informations comprennent une modification d'une image optique détectée dudit motif.

5. Composant (100) selon l'une des revendications 1 à 3, dans lequel les premiers éléments optiques (220) et les seconds éléments optiques (240) forment un interféromètre de Michelson et les informations sont basées sur un motif d'interférence de Michelson.

6. Composant (100) selon l'une des revendications 1 à 3, dans lequel au moins l'un des premiers éléments optiques (220) et au moins l'un des seconds éléments optiques (240) présentent respectivement une plaque partiellement réfléchissante (227, 247) et sont configurés pour former un interféromètre de Fabry-Pérot pour au moins l'un des au moins deux faisceaux (331, 332).

7. Composant (100) selon l'une des revendications précédentes, dans lequel au moins un autre élément de support comportant un ou plusieurs autres éléments optiques est réalisé dans la cavité (100) et est partiellement inséré dans le composant (100).

8. Procédé pour la fabrication d'un composant (100) selon la revendication 1, le procédé comprend les étapes consistant à

   fournir (S110) un composant de départ comportant une cavité de départ ;
   positionner (S120) le premier élément de support (210) et l'au moins un autre élément de support (230) dans la cavité de départ ;
mouler (S130) le composant de départ afin de réaliser le composant (100) et la cavité (110) ; ainsi que
assembler plastiquement (S140) le premier élément de support (210) ainsi que l'au moins un autre élément de support (230) afin de fixer le premier élément de support (210) et l'au moins un autre élément de support (230) dans la cavité (110).

Fig. 1

Fig. 2

Fig. 3

(a)

(b)

Fig. 4

(a)

(b)

Fig. 5

Bereitstellen eines Ausgangsbauteils mit einem Ausgangshohlraum — S110

Positionieren eines ersten Tragelements und mindestens eines weiteren Tragelements in den Ausgangshohlraum — S120

Kaltumformen des Ausgangsbauteils, um so das Bauteil und den Hohlraum auszubilden — S130

plastisches Fügen eines Abschnitts des ersten Tragelements sowie eines Abschnitts des mindestens einen weiteren Tragelements in das Bauteil — S140

Fig. 6

(a)

(b)

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012005614 B4
- WO 2016177356 A1
- WO 2013072712 A1
- DE 4132110 A1
- US 20130265233 A1
- US 20190072443 A1
- DE 102017101580 A1